# EUROPEAN PATENT APPLICATION

(11) **EP 2 688 038 A1**
(43) Date of publication of application: **22.01.2014**
(21) Application number: 13176813.7
(22) Date of filing: 17.07.2013
(51) Int. Cl.: G06T 3/40, H04N 7/01, H04N 13/00, G06T 19/20, H04N 13/02

(54) **Image data scaling method and image display apparatus**

(30) Priority: 17.07.2012 KR 20120077903
(71) Applicant: Samsung Electronics Co., Ltd, Gyeonggi-do 443-742 (KR)
(72) Inventor: Lee, Ho-nam, Seoul (KR); Kwon, Young-jin, Gyeonggi-do (KR); Kim, Tae-sung, Gyeonggi-do (KR)
(74) Representative: Walaski, Jan Filip

(57) **Abstract**

An image data scaling method is disclosed. The image data scaling method includes generating a depth map including depth information for each of a plurality of areas of a 3-dimensional (3D) image frame constituting image data, setting a scale ratio in each area of the 3D image frame based on the generated depth map, scaling the 3D image frame based on the set scale ratio, and outputting the scaled 3D image frame.

## Description

The present invention relates to displaying an image, and more specifically, to an image data scaling method and an image display apparatus.

Various electronic apparatuses are being invented and provided based on advanced electric technologies. Particularly, display apparatuses such as TVs, cellular phones, PCs, notebook PCs, PDAs, and other display apparatuses are being utilized in the homes of consumers.

While the utilization of display apparatuses increases, there is an increasing demand by users for the display apparatuses to include more functions. As a result, electronics manufacturers have put more effort into meeting the needs of consumers, and display apparatuses having new functions are quickly being developed.

Recently, a 3-dimensional (3D) display apparatus providing images with illusion of depth has been introduced. Along with this, wide screen display apparatuses, having an aspect ratio of a wider horizontal width than conventional display apparatuses, have gained popularity. On the wide screen, the aspect ratio set when encoding the inputted contents may be different from the aspect ratio set when decoding and outputting the contents.

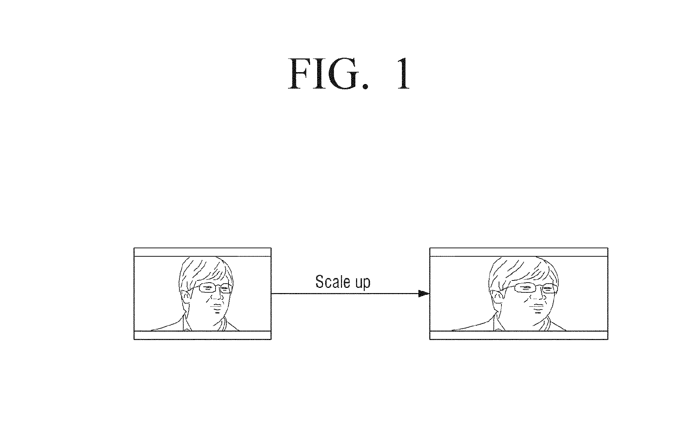

For instance, when the aspect ratio of the encoded image data is different from the aspect ratio of the decoded image data, upon scaling of the image data, the image may be distorted as illustrated in FIG. 1. FIG. 1 illustrates image distortion when the inputted image data having the aspect ratio of 16:9 is scaled up and displayed at an aspect ratio of 21:9.

Thus, methods and apparatuses which can minimize the image distortion after scaling due to different screen sizes, when there is a difference of aspect ratios between the encoded data and the decoded image data, are necessary.

Exemplary embodiments may overcome the above disadvantages and other disadvantages not described above.

According to an exemplary embodiment, a technical objective is to provide an image data scaling method and an image display apparatus to minimize image distortion and provide a more natural looking image when scaling the image data having different aspect ratios between the encoded image data and the decoded image data.

According to an exemplary embodiment, an image data scaling method is provided, which may include generating a depth map including depth information for each of a plurality of areas of a 3-dimensional (3D) image frame constituting image data, setting a scale ratio in each area of the 3D image frame based on the generated depth map, scaling the 3D image frame based on the set scale ratio, and outputting the scaled 3D image frame.

The image data scaling method may additionally include generating the 3D image frame including at least one of a left-eye image frame and a right-eye image frame from a 2-dimensional (2D) image frame.

The depth information may include depths of respective pixels of the 3D image frame.

The setting the scale ratio may include setting a scale ratio of a second area of the 3D image frame with reference to a first area of the 3D image frame having a depth equal to, or less than, a predetermined value. The setting the scale ratio may include setting a scale ratio of a second pixel of a series of pixels arranged on respective pixel lines of the 3D image frame based on a first pixel having a depth equal to, or less than, a predetermined value.

According to another exemplary embodiment, an image display apparatus is provided, which may include a scaler which scales a 3-dimensional (3D) image frame constituting image data according to a set scale ratio, an output device which outputs the scaled 3D image frame, and a controller which generates a depth map including depth information in each of a plurality of areas of the 3D image frame and sets the scale ratio in each area of the 3D image frame according to the generated depth map.

The controller may generate the 3D image frame including at least one of a left-eye image frame and a right-eye image frame from a 2-dimensional (2D) image frame.

The depth information may include depths of respective pixels of the 3D image frame.

The controller may set the scale ratio of a second area of the 3D image frame with reference to a first area of the 3D image frame having a depth equal to, or less than, a predetermined value. The controller may set the scale ratio of a second pixel of a series of pixels arranged on respective pixel lines of the 3D image frame based on a first pixel having a depth equal to, or less than, a predetermined value.

According to another exemplary embodiment, a method of scaling 3-dimensional (3D) image data to be displayed on a 3-D display apparatus may include scaling the 3-D image data, which is encoded according to an aspect ratio different from an aspect ratio of the 3-D display apparatus, according to a depth of the 3-D image data; and displaying the scaled 3-D image data.

According to another exemplary embodiment, a 3-dimensional (3D) display apparatus includes a 3-D image data scaler to scale 3-D image data, which is encoded according to an aspect ratio different from an aspect ratio of the 3-D display apparatus, according to a depth of the 3-D image data, and a screen to display the scaled 3-D image data.

According to various exemplary embodiments, when the scaling of the image data is performed in a situation in which the encoded aspect ratio of the image data is different from the decoded aspect ratio of the image data, distortion on the image is minimized and therefore, the viewer can view a natural looking image.

The above and/or other aspects of the exemplary embodiments will be more apparent by describing certain exemplary embodiments with reference to the accompanying drawings, in which:
FIG. 1 is a conceptual view of a screen of a conventional display apparatus displaying image data after the image data is scaled;
FIG. 2 illustrates a method of scaling by utilizing 3-dimensional (3D) depth information according to an exemplary embodiment;
FIG. 3 is a flowchart provided to explain a scaling method to scale the image data according to an exemplary embodiment;
FIG. 4 is a flowchart provided to explain a scaling method to scale the image data according to another exemplary embodiment;
FIG. 5 illustrates a situation in which image processing of a boundary is performed according to an exemplary embodiment;
FIG. 6 is a view provided to explain a method for processing by providing depth distortion in the exemplary embodiment of FIG. 5;
FIG. 7 illustrates a method of resolving the example of FIG. 5 by utilizing a display apparatus capable of displaying a full 3D image frame thereon;
FIG. 8 is a block diagram of an image display apparatus for performing the above-mentioned method according to an exemplary embodiment;
FIG. 9 is a detailed block diagram of a controller of an image display apparatus according to an exemplary embodiment;
FIG. 10 is a block diagram of an image display apparatus additionally including a 3D image frame generating module according to an exemplary embodiment;
FIG. 11 is a block diagram of an image display apparatus according to another exemplary embodiment;
FIG. 12 is a detailed block diagram of a signal processing unit according to an exemplary embodiment;
FIG. 13 is a detailed block diagram of a circuit structure of an output device according to an exemplary embodiment; and
FIG. 14 is a block diagram of a circuit structure of a display panel according to an exemplary embodiment.

Certain exemplary embodiments will now be described in greater detail with reference to the accompanying drawings. In the following description, the same drawing reference numerals are used for the same elements even in different drawings. The matters defined in the description, such as a detailed construction and elements, are provided to assist in a comprehensive understanding of the exemplary embodiments. Accordingly, it is apparent that the exemplary embodiments can be carried out without those specifically defined matters. Also, well-known functions or constructions are not described in detail since they would obscure the exemplary embodiments with unnecessary detail.

FIG. 1 is a conceptual view of a screen of a conventional display apparatus displaying image data after the image data is scaled.

Referring to FIG. 1, when the aspect ratio of the inputted image data is different from the aspect ratio of the screen which displays the data, after scaling of the image data, the inputted image data may be displayed in a distorted manner.

According to exemplary embodiments, the term 'scaling' as used herein may indicate a process of multiplying the distribution range of pixels by an integer to cause the distribution range of the pixels to be within a predetermined range. Further, the term 'up-scaling' refers to the process implemented when the predetermined range is higher than the distribution range of the original image data pixels. After up-scaling, the screen of the image data may be increased to a predetermined ratio. On the contrary, 'down-scaling' refers to the process implemented when the predetermined range is equal to, or less than, the distribution range of the original image data pixel. After down-scaling, the screen of the image data may be decreased to a predetermined ratio. In up-scaling, because one pixel of the inputted image data may match a plurality of pixels of the scaled screen on which the image data is displayed, the resolution may be lower.

When the aspect ratio of the inputted image data is different from the aspect ratio of the screen on which the image data is displayed, the image may be displayed in a distorted fashion after being scaled, as illustrated in FIG. 1. Referring to FIG. 1, the inputted image data having a 16:9 aspect ratio (ratio between width to height of the screen) is up-scaled to a 21:9 aspect ratio, and the image data having the 21:9 aspect ratio is outputted, containing distortion.

Since image distortion may occur upon scaling image data between different aspect ratios, a method to lessen the image distortion is necessary.

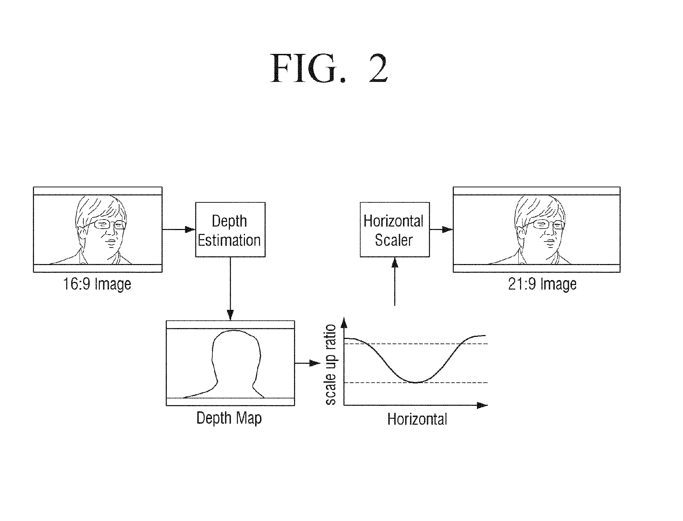

FIG. 2 illustrates a method of scaling the image data by utilizing 3-dimensional (3D) depth information according to an exemplary embodiment.

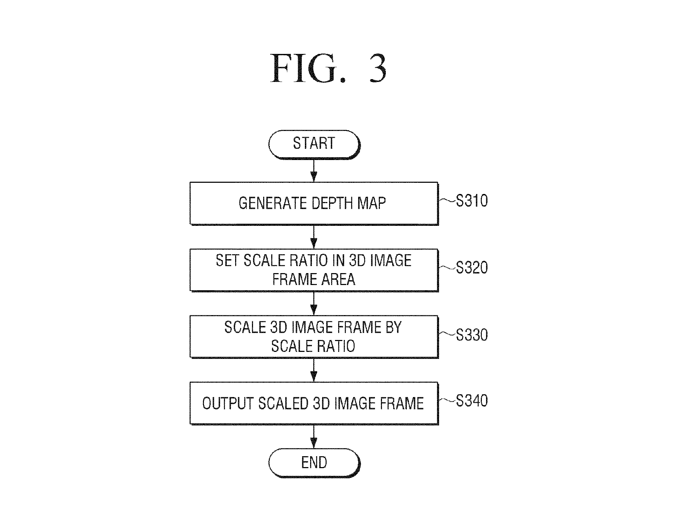

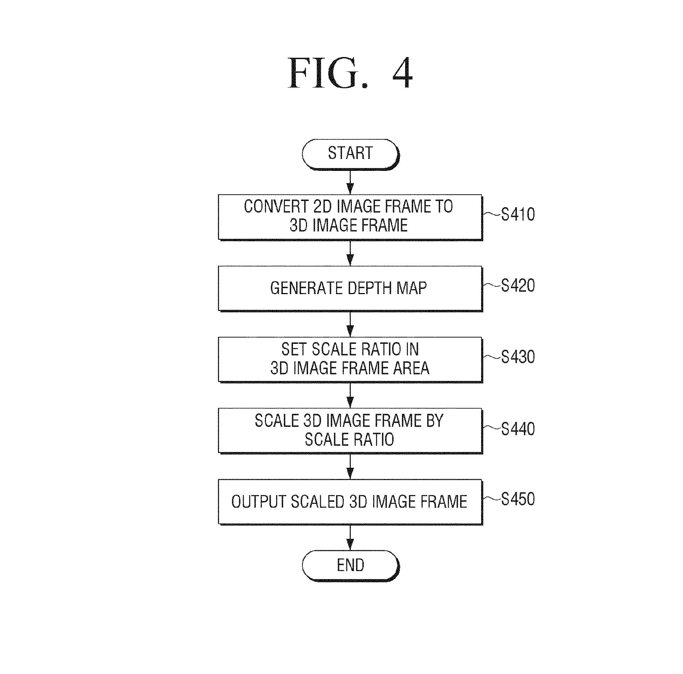

Referring to FIG. 2, a scaling method to scale the image data according to an exemplary embodiment may estimate the depth of the image data and generate a depth map by utilizing the estimated depth information. According to the generated depth map, scaling may be performed in each area of the image data with a different scaled ratio. For example, as a result, the image data on the center of the screen may be displayed without distortion after up-scaling as illustrated in FIG. 2. The scaling method of FIG. 2 will be further explained below when describing the scaling methods of FIGs. 3 and 4.

FIG. 3 is a flowchart provided to explain a scaling method to scale the image data according to an exemplary embodiment.

Referring to FIG. 3, the scaling method of image data according to an exemplary embodiment includes generating a depth map at operation S310, setting a scale ratio at operation S320, scaling at operation S330, and outputting the image at operation S340.

At operation S310, the depth map is generated, including the depth information in each area of the 3D image frame constituting the image data.

According to exemplary embodiments, the term '3D image frame' as used herein may indicate the image frame constituting the 3D image contents, and the term '3D image contents' as used herein may indicate the contents utilizing multi-view images expressing an object from a plurality of viewpoints to provide a viewer with an illusion of depth. The 3D image frame may consist of a left-eye image frame and a right-eye image frame. Furthermore, the term '2-dimensional (2D) contents' may refer to the contents of the image frames from one viewpoint. The 3D image frame may include the depth information of a dimensional degree.

Also, according to exemplary embodiments, the term 'depth information' as used herein refers to information related to the depth of the 3D image, and may correspond to the degree of the binocular disparity between the left-eye image frame and the right-eye image frame of the 3D image. The feeling of depth experienced by the viewer varies depending on the depth information. When the depth information is larger, the binocular disparity may be larger and the feeling of depth may be stronger. When the depth information is smaller, the binocular disparity may be lower and the feeling of depth may be weaker.

The relationship between the binocular disparity and the 3D effective results will be further described below.

The feeling of depth that a normal user perceives occurs due to a complex response of the changes in width of a crystalline lens according to object position, the differences in the degree between the two eyes and the object, the differences in the position and the shape that the left eye and the right eye can perceive, the difference in time by the object movement, and the effects caused by other psychological feelings or memories. In particular, the binocular disparity caused by the fact that the two eyes of a user are typically spaced apart by 6∼7 cm is an important factor in causing the feeling of depth. Due to the binocular disparity, a user watches the object at different angles so that the images coming to the two eyes are different from each other, and the brain combines the image information of the two images when the images are delivered through the retinas, causing the user to observe a 3D image.

Thus, when the same image or object is viewed from the left eye and the right eye alternately on the image display apparatus, the viewpoints have a difference in angles, and the binocular disparity occurs. When the phase difference in lateral direction is provided to the left-eye image and the right-eye image, the binocular disparity increases so that the user experiences the feeling of viewing a 3D image from a 2D image.

The depth map is further explained hereinafter. According to exemplary embodiments, the term 'depth map' as used herein may indicate a table including the depth information of each area of the display screen. The areas may be divided into pixel units, or may be defined by a predetermined area larger than pixel units. The term 'depth information' may refer to information related to the depth of the area or the pixel in the 3D image frame. According to an exemplary embodiment, the depth map may correspond to the 2D image of the grayscale indicating the depth of the pixel in the image frame.

After generating the depth map, the scale ratio may be set in each area of the 3D image frame according to the depth map at operation S320. According to exemplary embodiments, the term 'scale ratio' as used herein may indicate the information related to the ratio for expanding or reducing the 3D image frame compared to the other areas of the screen based on the area that the viewer mainly views on the image data screen. The area that the viewer mainly views may include the area substantially excluded from the scaling. Thus, part of the mainly-viewed area may have the scale ratio of 1:1, which would cause no difference in displaying image data before and after the scaling. This particular area may thus be the reference for the scaling.

According to exemplary embodiments, the term 'mainly-viewed area' may be defined as the area having a lower depth than a predetermined value. Based on the 3D image frame area having the depth equal to, or less than, the predetermined value, the scale ratio of the other 3D image frame areas may be set. According to exemplary embodiments, the term 'predetermined value' as used herein may refer to a reference value that is used to identify an object. For instance, referring to FIG. 2, in scaling with reference to a person appearing on the screen, the depths in the screen areas (e.g., pixels) matched with the person may be different from each other; however, all of these depths are equal to, or less than the predetermined value. Thus, the predetermined value becomes a reference to identify the person from the background, i.e., becomes a reference to identify an object. All or part of this area may have the scale ratio of 1:1, and there is no difference in displaying the image data before and after the scaling.

When the 3D image frame area having the depth equal to, or less than, the predetermined value is set as critical value 1, the scale ratio to the horizontal direction of the screen becomes approximately as represented by the graph of FIG. 2. Referring to FIG. 2, the area of the image of the person having the lower depth may be displayed similarly to the image data generated first by the scale ratio of approximately 1:1. Meanwhile, the background having the higher depth may be displayed distortedly because the scale ratio may be set to be approximately 1:2. Since the mainly-viewed area, which is a primary viewing target, is the area of the person appearing on the screen having the lower depth of FIG. 2, the viewer may not observe any substantial distortion of the screen, and may be able to view the man in the center of the screen.

According to another exemplary embodiment, the operation of setting the scale ratio may include setting the scale ratio of another pixel based on a pixel having the depth equal to, or less than, the predetermined value. To perform the scaling, the data may be read based on a horizontal scanning unit from a memory storing the image frame of the image data. The horizontal scanning unit may be one pixel line connected horizontally on each image frame. Based on the pixel having the depth equal to, or less than, the predetermined value, the scaling may be performed. In other words, from the pixel having the depth equal to, or less than, the predetermined value, the scale ratio may be set for the area having a depth higher than the predetermined value.

When at least one pixel of the 3D image frame having the depth equal to, or less than, the predetermined value is set to be the critical value 1, the scale ratio in the horizontal direction on the screen may become approximately as represented in the graph of FIG. 2. As explained with reference to the above exemplary embodiment, the area of the person in FIG. 2 having the lower depth may not be different from the first generated image data based on the scale ratio being approximately 1:1. The background having the higher depth may be distorted by the scale ratio of approximately 1:2.

When the scale ratio is set, the 3D image frame may be scaled by the scale ratio at operation S330. As described above, the scaling may expand or reduce the image frame of the image data to the predetermined value. For instance, when one pixel of the image data is (R1G1B), and when up-scaling is performed in the horizontal direction, the two pixels corresponding to the image data may be converted to (R1G1B1), and thus, the pixels may be (R1G1B1)(R1G1B1). However, the pixels in the mainly-viewed area having the lower depth may be seldom scaled, and therefore, a pixel in the mainly-viewed area (e.g., (R2G2B2)) may be outputted without up-scaling.

After scaling, the 3D image frame may be outputted at operation S340. The output device of the display apparatus may perform the outputting.

FIG. 4 is a flowchart provided to explain a scaling method to scale the image data according to another exemplary embodiment.

Referring to FIG. 4, in comparison with the method shown in FIG. 3, the image data scaling method may further include converting the 2D image frame into the 3D image frame at operation S410.

At least one of the left-eye image frame and the right-eye image frame constituting the 3D image frame may be generated from the 2D image frame. Thus, the generated 3D image frame may be scaled as described above.

The method of generating the 3D image frame may include generating a left-eye image frame after shifting the 2D image frame to the right based on a predetermined position, and generating a right-eye image frame after shifting the 2D image frame to the left based on a predetermined position. As described above, as the viewer watches the left-eye image frame with the left eye and the right-eye image frame with the right eye, he or she feels the 3D effect. The left-eye image and the right-eye image may have a higher frame rate than that of the 2D image. The process of converting the left-eye image and the right-eye image to the higher frame rate may be performed by a frame rate converting unit (not illustrated).

The frame rate converting unit may convert the frame rate of the 3D image frame with reference to the outputting rate of the display apparatus. For instance, when the display apparatus operates at 60 Hz, the frame rate converting unit may convert the frame rate of the 3D image frame to 120 Hz.

To summarize the image data scaling method explained above according to another exemplary embodiment, the 2D image frame may be converted to the 3D image frame at operation S410, the depth map may be generated at operation S420, the scale ratio may be set at operation S430, the scaling may be performed at operation S440, and the result of the scaling may be outputted at operation S450. When the 3D image frame includes both the left-eye image frame and the right-eye image frame, the left-eye image frame and the right-eye image frame may be processed in the manner explained above.

Accordingly, the image data scaling method according to exemplary embodiments may be implemented after the 2D image frame is converted to the 3D image frame. However, the image data scaling method may also be utilized in case the 2D image frame is outputted as the 2D image frame, or the 3D image is outputted as the 3D image frame. The above operations may be equally utilized in these cases.

When the 2D image frame is outputted as a 2D image frame, the depth map corresponding to each area of the 2D image frame may be generated, the scale ratio may be set, the scaling may be performed, and the resultant data may be outputted. Even though the 2D image frame is not converted to the 3D image frame, the depth map may be generated in the same way as the depth map is generated for the converting. However, the depth map may not be utilized for generating the 3D image frame but in scaling.

When the 3D image frame is outputted, the depth map corresponding to each area of the 3D image frame may be generated (or may be already generated), the scale ratio may be set, the scaling may be performed, and the resultant data may be outputted. The depth map may be utilized for scaling rather than for generating a new 3D image frame. When the image frame after scaling is considered as a new 3D image frame, the depth map may be utilized for generating new 3D image frame.

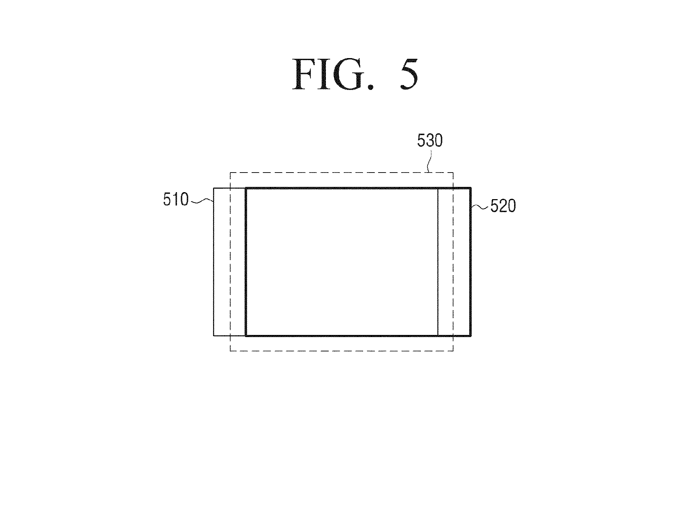

In the process of converting the 2D image frame to the 3D image frame, image processing at the side boundary of the image display apparatus 100 may experience a problem. To overcome this problem, a method of processing the side boundary in the image displayed in the image display apparatus 100 will be explained below. The image processing method described below in connection with FIG. 5 may be performed along with the image scaling methods according to exemplary embodiments as described above, or alternatively, may be performed separately.

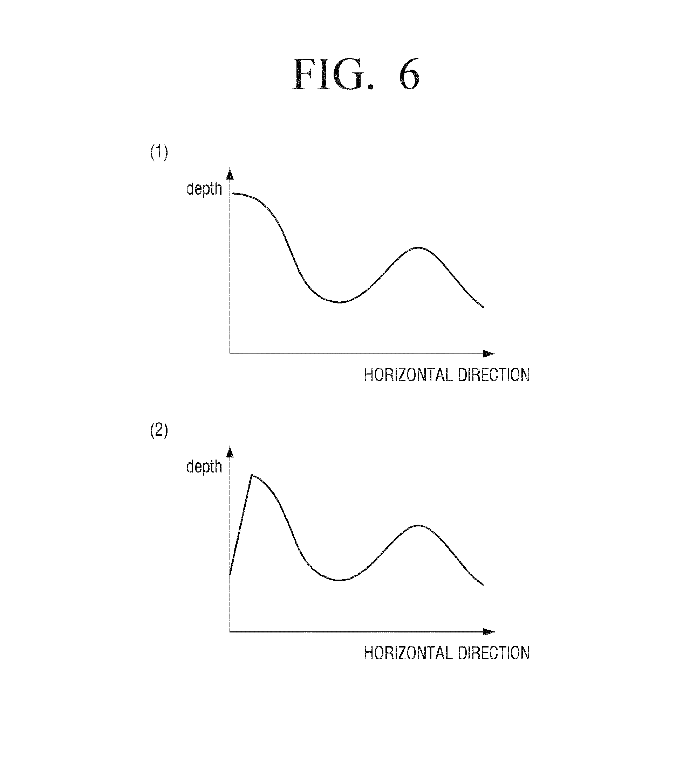

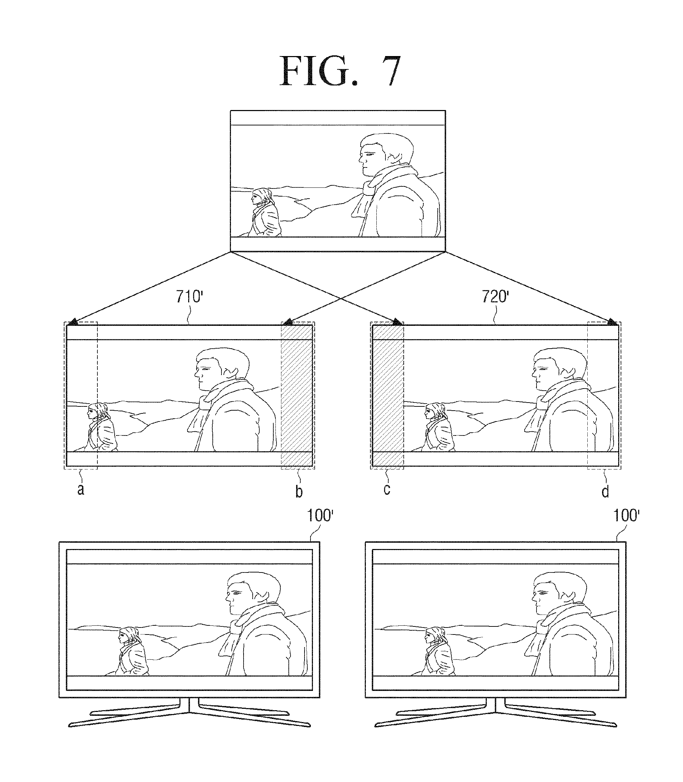

FIG. 5 illustrates a situation in which image processing of a boundary is performed according to an exemplary embodiment, FIG. 6 is a view provided to explain a method for processing by providing depth distortion in the exemplary example of FIG. 5, and FIG. 7 illustrates a method of resolving the example of FIG. 5 by utilizing a display apparatus capable of displaying a full 3D image frame thereon.

As described above, the 3D image frame may include the right-eye image frame generated by shifting the 2D image frame to the left based on a predetermined position and the left-eye image frame generated by shifting the 2D image frame to the right based on a predetermined position. However, because the shifting in the area of the image frame may be different from each other, unlike the illustration in FIG. 5, the image frame may be distorted due to different degrees of shifting depending on the image frame areas. The actual display screen may look as represented by a dotted rectangle 530 in FIG. 5. Since the display screen may be a fixed area in terms of the hardware aspect, the display screen may not be able to accommodate all the right-eye image frames 510 and the left-eye image frames 520 of the full 3D image frame. That is, the left boundary area of the right-eye image frame 510 and the right boundary area of the left-eye image frame 520 may not be displayed. While the left boundary area of the right-eye image frame 510 is not displayed, the corresponding left area of the left-eye image frame 520 may be displayed. Thus, the corresponding left area may not have the 3D effect. Likewise, while the right boundary area of the left-eye image frame 520 is not displayed, the corresponding right area of the right-eye image frame 510 may be displayed. Thus, the corresponding right area may not have the 3D effect. This problem may be solved as described below.

First, the area excluded from the 3D effect may be deleted in the image frame. For instance, the left area of the left-eye image frame 520 corresponding to the un-displayed left boundary area of the right-eye image frame 510 may be processed in black or be deleted. Likewise, the right area of the right-eye image frame 510 corresponding to the un-displayed right boundary area of the left-eye image frame 520 may be processed in black or be deleted. As a result, the display screen having the 3D effect may be displayed as the narrower image cut at both sides compared to the 2D image, in other words, as a partially-cut image.

Second, the adjoining area to the area excluded from the 3D effect in the image frame may be distorted in depth. The un-displayed left boundary area of the right-eye image frame 510 and the un-displayed right boundary area of the left-eye image frame 520 may be displayed as a 2D image. However, because the adjoining area of the un-displayed areas may have the 3D effect, the overall image looks awkward. Particularly, when the adjoining area of the 3D image has the higher depth, the awkward looking image may become more severe. The depth of the adjoining area in the 3D image may be gradually decreased toward the 2D image so that the connected area may be processed to look more natural. The graph illustrated in FIG. 6 (1) shows that the adjoining area depth of the 3D image is bigger, and the graph illustrated in FIG. 6 (2) shows that the depth is processed by distortion.

Third, the image display apparatus 100' may solve the problem by displaying the full 3D image frame. Referring to FIG. 7, when the right-eye image frame 710' and the left-eye image frame 720' of the 3D image frame are generated from the 2D image frame, and when the image display apparatus 100' includes enough length to the right and the left to display the converted 3D image, the full 3D image may be displayed because the right boundary area d of the left-eye image frame 720' and the left boundary area a of the right-eye image frame 710' may be displayed in the screen. The right boundary area b of the right-eye image frame 710' and the left boundary area c of the left-eye image frame 720' may not include the image. By utilizing the adjoining image information, interpolation may be performed, or the processing may be performed in black. For instance, when the 2D image frame fit to a 16:9 display screen is converted to the 3D image frame, and when the image display apparatus 100' has the 21:9 display screen, the full 3D image may be displayed without distorting or deleting the image.

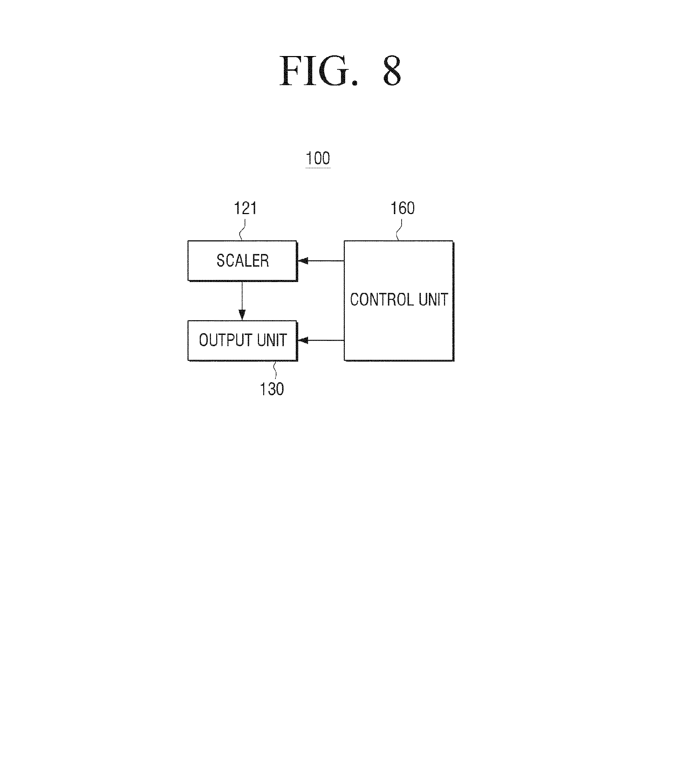

FIG. 8 is a block diagram of an image display apparatus for performing the above-mentioned method according to an exemplary embodiment.

Referring to FIG. 8, the image display apparatus 100 includes a scaler 121, an output device 130, and a controller 160.

The scaler 121 (also referred to as a "3-D image data scaler") may scale the 3D image frame according to the set scale ratio. As described above, the scaling may multiply the pixel distribution range by an integer to place the pixel distribution range within a predetermined range. Up-scaling may be implemented when the predetermined range is higher than the pixel distribution range of the first image data. Upon up-scaling, the image data screen may expand to the predetermined ratio. Meanwhile, down-scaling may be implemented when the predetermined range is equal to, or less than, the pixel distribution range of the inputted image data. Upon down-scaling, the image data screen may be reduced to the predetermined ratio.

When the scale ratio is set, the scaler 121 may scale the 3D image frame according to the scale ratio. As already described, the scaling may perform the expansion or the reduction of the image frame of the image data to a predetermined ratio. For instance, when one pixel of the image data is (R1G1B1), and when 2x up-scaling is performed in the horizontal direction, the two pixels corresponding to the scaled image data may be converted to (R1G1B1), and thus, the two pixels may be (R1G1B1)(R1G1B1). However, because the mainly-viewed area having the lower depth may be seldom scaled, a pixel of the mainly-viewed area (R2G2B2) may be outputted without up-scaling.

The output device 130 may output the scaled image data. The output device 130 is further explained below.

The controller 160 may be a microprocessor, a central processing unit (CPU), or a processor chip performing a control function. Further, in the software level, the controller 160 may be an operating system (OS) handling the hardware, an application calling the OS and performing particular functions, or a combination of the above elements.

According to exemplary embodiments, the controller 160 controls the overall operation of the image display apparatus 100, and performs a specific job. Particularly, in various exemplary embodiments, the controller 160 may generate the depth map including the depth information in each area of the 3D image frame constituting the image data, and set the scale ratio in each area of the 3D image frame based on the generated depth map. The controller 160 may also perform the calculating as well as the controlling.

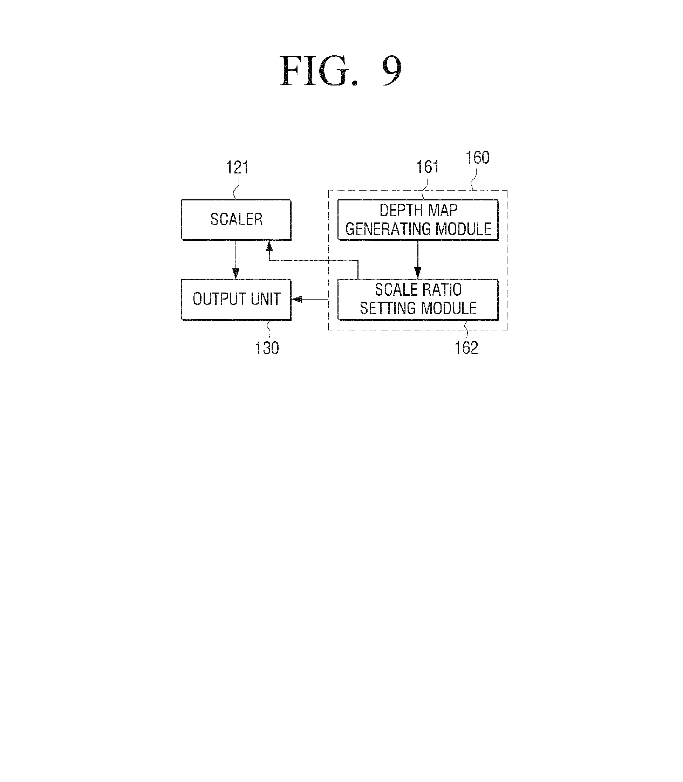

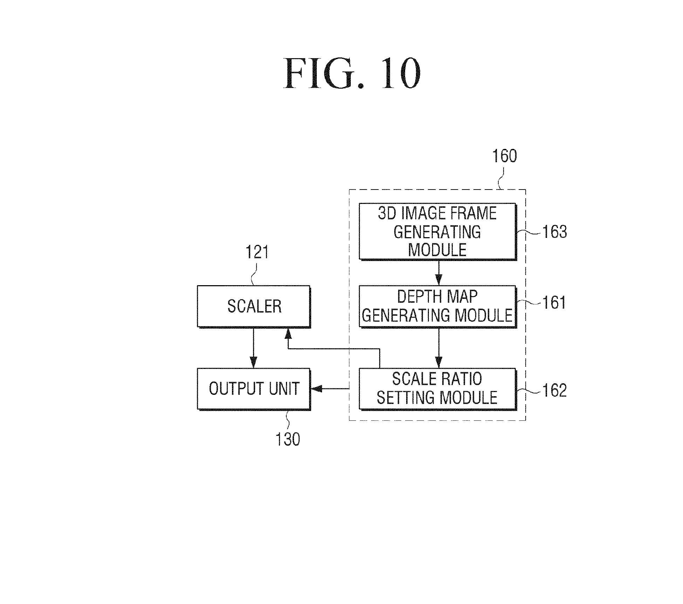

FIG. 9 is a detailed block diagram of a controller of an image display apparatus according to an exemplary embodiment, and FIG. 10 is a block diagram of an image display apparatus additionally including a 3D image frame generating module according to an exemplary embodiment.

Referring to FIG. 9, the controller 160 may include a depth map generating module 161, and a scale ratio setting module 162. The depth map generating module 161 may generate the depth map. Specifically, the depth map generating module 161 may generate the depth map including area depth information of the 3D image frame constituting the image data.

According to exemplary embodiments, the term '3D image frame' as used herein may indicate the image frame constituting the 3D image contents, and the term '3D image contents' as used herein may indicate the contents providing the feeling of depth to the viewer by utilizing the multi-view image expressing an object from a plurality of different viewpoints. Further, the term '2D contents' as used herein may indicate the contents of the image frame representing an object from one viewpoint. The 3D image frame may include the depth information regarding the degree of the feeling of depth.

As described above, the depth information may represent the 3D image depth, and correspond to the degree of the binocular disparity between the left-eye image frame and the right-eye image frame. Depending on the depth information, the feeling of depth that a viewer can perceive may be varied. When the depth is higher, the binocular disparity between the left and right eyes increases, and the feeling of depth also increases. Meanwhile, when the depth is lower, the binocular disparity between the left and right eyes decreases, and the feeling of depth is weaker.

The depth map will be explained below.

According to exemplary embodiments, the term 'depth map' as used herein may indicate the table including the area depth information of the display screen. The area may be divided into pixel units or may be defined as a predetermined area larger than the pixel unit. The depth information may represent the depth of the 3D image area or the pixel. According to an exemplary embodiment, the depth map may correspond to the 2D image of the grayscale showing the depth in each pixel of the image frame.

After the depth map is generated, the scale ratio setting module 162 of the controller 160 may set the scale ratio in each area of the 3D image frame according to the generated depth map. The scale ratio may be the information regarding the ratio to be implemented to expand or reduce the 3D image frame based on the mainly-viewed area in the image data screen. The mainly-viewed area may include the area in which the scaling is seldom performed. Part of this mainly-viewed area may have the scale ratio of 1:1, in which case displaying the image data may not be different before and after the scaling. Thus, this area may be the reference of the scaling.

According to an exemplary embodiment, the mainly-viewed area may be defined as the area having the depth equal to, or less than, the predetermined value. Based on the 3D image frame area having the depth equal to, or less than, the predetermined value, the scale ratio may be set regarding the other area of the 3D image frame. The predetermined value may be used as a reference to identify an object. For instance, referring to FIG. 2, when the scaling is performed based on an area of a man appearing on the front on the screen, the respective depths of the areas matching the man may be different from one another, but all are equal to, or less than, the predetermined value. According to exemplary embodiments, the term 'predetermined value' as used herein may refer to a value which can be used to identify the man from the background, and thus, may be a reference to identify objects. All or part of this area may have the scale ratio of 1:1, in which displaying the image data may not be different before and after scaling.

When the 3D image frame area having the depth equal to, or less than, the predetermined value is set as critical value 1, the scale ratio to the horizontal direction of the screen may become approximate to the graph of FIG. 2. Referring to FIG. 2, the man-appearing area having the lower depth may be displayed similarly to the image data generated first by the scale ratio of approximately 1:1. Meanwhile, the background having the higher depth may be displayed distortedly because the scale ratio may be set approximately as 1:2. Because the mainly-viewed area is the front-appearing man area having the lower depth of FIG. 2, the viewer may not feel the distortion of the screen in a significant way, and may be able to find the man.

According to another exemplary embodiment, the scale ratio of the pixels placed on each pixel line of the 3D image frame may be set based on the pixel having the depth equal to, or less than, the predetermined value. To perform the scaling, the data may be read based on the horizontal scanning unit from the memory storing the image frame of the image data. The horizontal scanning unit may be one pixel line connected horizontally on each image frame. Based on the pixel having the depth equal to, or less than, the predetermined value, the scaling may be performed. In other words, from the pixel having the depth equal to, or less than, the predetermined value, the predetermined scale ratio may be set regarding the area having the depth higher than the predetermined value.

When at least one pixel of the 3D image frame having the depth equal to, or less than, the predetermined value is set to be critical value 1, the scale ratio to the horizontal direction on the screen may become approximate to the graph of FIG. 2. Like in the above exemplary embodiment, the man-appearing area in FIG. 2 having the lower depth may not be different from the first generated image data considering the scale ratio of approximately 1:1. The background having the higher depth may be distorted due to the scale ratio of approximately 1:2.

When the scale ratio is set, the scaler 121 may scale the 3D image frame according to the scale ratio. As described above, the scaling may expand or reduce the image frame of the image data to the predetermined ratio. For instance, when one pixel of the image data is (R1G1B1), and when the 2x up-scaling is performed to the horizontal direction, the two pixels corresponding to the image data may be converted to (R1G1B1), and thus, the pixels may be (R1G1B1)(R1G1B1). However, the mainly-viewed area having the lower depth may be seldom scaled, and the pixel of the area (R2G2B2) may be outputted without up-scaling.

The output device 160 may output the 3D image frame after scaling. The output device 130 of the display apparatus 100 performs outputting.

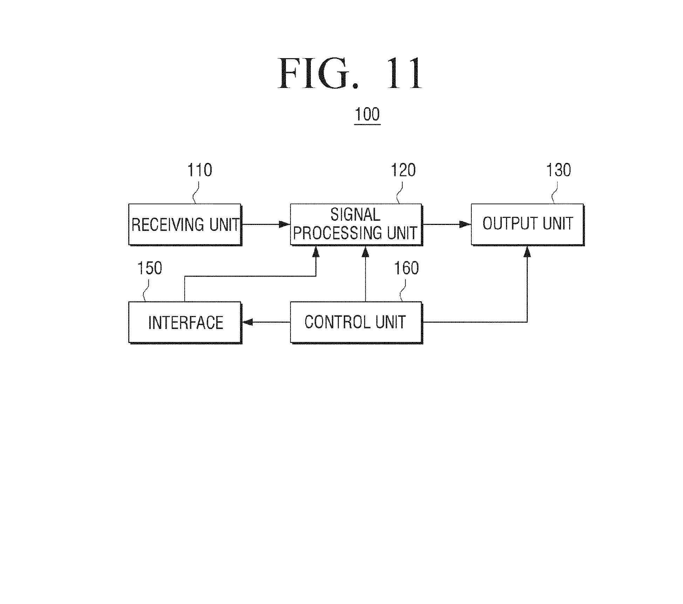

Before outputting the 3D image frame, the controller 160 may control conversion of the 2D image frame to the 3D image frame. A 3D image frame generating module 163 of FIG. 10 and a signal processing unit 120 of FIG. 11, which will be described below, may perform the converting. When the image display apparatus 100 receives the 2D image frame, the 3D image frame generating module 163 and the signal processing unit 120 may first convert the 3D image frame. The 3D image frame generating module 163 may constitute the framework of the image display apparatus 100, and the signal processing unit 120 may be included in an integrated circuit and controlled according to control operations of the controller 160. The generated 3D image frame may be scaled by the above scaling method.

The method of generating the 3D image frame may include generating the left-eye image frame by shifting the 2D image frame to the right by a predetermined position and also generating the right-eye image frame by shifting the 2D image frame to the left by a predetermined position. As described above, upon viewing the left-eye image frame with the left eye and the right-eye image frame with the right eye, the viewer feels the 3D effect. The left-eye image and the right-eye image may have a higher frame rate than the frame rate of the 2D image. The higher frame rate may be generated by a frame rate converting unit (not illustrated).

That is, the frame rate converting unit may convert the frame rate of the 3D image frame by referring to the outputting rate of the display apparatus. For instance, when the display apparatus operates at 60 Hz, the frame rate converting unit may convert the frame rate of the 3D image frame to 120 Hz.

When the process of converting to the 3D image frame is included, the image display apparatus 100 may receive the 2D image frame, convert the 2D image frame to the 3D image frame, generate the depth map, set the scale ratio, scale the 3D image frame, and output the scaled 3D image frame. When the 3D image frame includes both the left-eye image frame and the right-eye image frame, the image display apparatus 100 may process both of the right-eye and left-eye image frames as explained above.

When the 2D image frame is outputted as a 2D image frame, the image display apparatus 100 may generate the depth map corresponding to each area of the 2D image frame, set the scale ratio, scale the 2D image, and output the scaled 2D image. Even though the 2D image frame is not converted to the 3D image frame, the image display apparatus 100 may generate the same depth map as the depth map generated for the converting. However, the depth map may not be utilized for generating the 3D image frame, but may instead be used for scaling.

When the 3D image frame is outputted as the 3D image frame, the image display apparatus 100 may generate the depth map corresponding to each area of the 3D image frame (or the depth maps may already have been generated), set the scale ratio, scale the 3D image frame, and output the scaled 3D image frame. The depth map may be utilized for scaling rather than for generating a new 3D image frame. When the image frame after scaling is considered as a new 3D image frame, it is understood that the depth map is utilized for generating a new 3D image frame.

When converting the 2D image frame to the 3D image frame, the image processing at the side boundary in the image display apparatus 100 may experience a problem. A method of processing the image side boundary in the image display apparatus 100 will be explained below. The image processing method may be performed along with the image scaling method as described above, or alternatively, performed separately.

As described above, the 3D image frame may include the right-eye image frame generated by shifting the 2D image frame to the left according to a predetermined position and the left-eye image frame generated by shifting the 2D image frame to the right according to a predetermined position. However, because the shifting in areas of the image frame may be different from each other, the image frame may be distorted having different degrees of shifting in the respective image frame areas.

When the image frame is distorted, the display screen may be formed as the area represented in a dotted rectangle in FIG. 5. Considering the fact that the display screen may be a fixed area at the hardware level, the right-eye image frame 510 and the left-eye image frame 520 of the full 3D image frame may not be displayed. The left boundary area of the right-eye image frame 510 and the right boundary area of the left-eye image frame 520 may not be displayed. Even though the left boundary area of the right-eye image frame 510 is not displayed, the corresponding left boundary area of the left-eye image frame 520 may be displayed. Thus, the corresponding left boundary area of the left-eye image frame 520 may not have the 3D effect. Likewise, even though the right boundary area of the left-eye image frame 520 is not displayed, the corresponding right boundary area of the right-eye image frame 510 may be displayed. Thus, the corresponding right area boundary area of the right-eye image frame 510 may not have the 3D effect. This problem may be solved as described below.

First, the area excluded from the 3D effect may be deleted from the image frame. For instance, the left area of the left-eye image frame 520 corresponding to the un-displayed right boundary area of the right-eye image frame 510 may be processed in black or be deleted. Likewise, the right area of the right-eye image frame 510 corresponding to the un-displayed right boundary area of the left-eye image frame 520 may be processed in black or be deleted. The display screen having the 3D effect may display the narrower image cut at both sides compared to the 2D image, in other words, may display a partially-cut image.

Second, the adjoining area to the area excluded from the 3D effect in the image frame may be distorted in depth. The un-displayed left boundary area of the right-eye image frame 510 and the un-displayed right boundary area of the left-eye image frame 520 may be displayed as a 2D image. However, because the adjoining area of the un-displayed areas may have a 3D effect, the overall image looks awkward. Particularly, when the adjoining area of the 3D image has a higher depth, the awkward looking image may become severe. The depth of the adjoining area in the 3D image may gradually decrease toward the 2D image to be distorted so that the connected area may be processed to look more natural. The graph illustrated in FIG. 6 (1) shows that the adjoining area depth of the 3D image is bigger, and the graph illustrated in FIG. 6 (2) shows that the depth is processed by applying distortion.

Thirdly, the image display apparatus 100' may solve the problem by displaying the full 3D image frame. Referring to FIG. 7, when the right-eye image frame 710' and the left-eye image frame 720' of the 3D image frame are generated from the 2D image frame, and when the image display apparatus 100' is long enough to the right and the left to display the converted 3D image, the full 3D image may be displayed because the right boundary area d of the left-eye image frame 720' and the left boundary area a of the right-eye image frame 710' may be displayed in the screen. The right boundary area b of the right-eye image frame 710' and the left boundary area c of the left-eye image frame 720' may not include the image. By utilizing the adjoining image information, interpolation may be performed, or processing may be performed in black. For instance, when the 2D image frame fit to a 16:9 display screen is converted to the 3D image frame, and when the image display apparatus 100' has a 21:9 display screen, the full 3D image may be displayed without distorting or deleting the image.

The image display apparatus 100 according to various exemplary embodiments will be further explained below.

FIG. 11 is a block diagram of an image display apparatus according to another exemplary embodiment.

Referring to FIG. 11, the image display apparatus 100 according to another exemplary embodiment includes a receiving unit 110, a signal processing unit 120, an output device 130, a controller 160, and an interface unit 150.

The receiving unit 110 may receive contents from various sources, such as, for example, a broadcasting station transmitting the broadcasting contents by utilizing a broadcasting network or a web server transmitting a file of contents by utilizing the Internet. Further, the image display apparatus 100 may receive the contents from a recording medium playing apparatus installed within or connected to the image display apparatus 100. The recording medium playing apparatus may be implemented as an apparatus that plays the contents stored in various types of recording media, such as, for example, a CD, a DVD, a hard disk, a blu ray disk, a memory card, a USB memory, or others.

There may be more than one receiving unit 110. Each receiving unit 110 may receive contents from different sources. For instance, a first receiving unit (not illustrated) may receive contents from a broadcasting station and a second receiving unit (not illustrated) may receive contents from a server. A receiving unit 110 receiving the contents from the broadcasting station may include a tuner (not illustrated), a demodulator (not illustrated), and an equalizer (not illustrated). Meanwhile, a receiving unit 110 for receiving the contents from the web server may include an interface card (not illustrated) connected to a specific port. The framework such as the OS and the application driving the interface card may be included in the receiving unit 110. The receiving unit 110 for receiving the contents from the apparatus playing the various types of the recording media may include an interface (not illustrated) connected to the apparatus for playing various types of the recording media. For instance, the receiving unit may include an AV socket, a COMP socket, or an HDMI socket. Specifically, when the 3D contents are received from the HDMI socket, the formatting may be performed by HDMI 1.4. The format may be at least one of Frame Packing, Field Alternative, Line Alternative, Side by Side, L + depth, and L + depth + graphics + graphics_depth.

Further, the receiving unit 110 may not necessarily receive the contents from the same types of sources, but may instead receive the contents from different types of sources. For instance, the receiving unit may receive 2D contents which are different from each other, or may receive a left-eye image frame or a right-eye image frame constituting the 3D contents. When the 2D contents are received, conversion into the 3D contents may be implemented, which will be further explained below.

The signal processing unit 120 may process the signal of the received contents. Although FIG. 11 illustrates a single processing unit 120, when a plurality of receiving units 110 are installed, there may be a plurality of processing units 120 corresponding to the plurality of receiving units 110. The signal processing unit 120 may process the signals of the received contents according to various methods. For example, when the 2D image frame is generated, the signal processing unit 120 may convert the 2D image frame to the 3D image frame according to control operations performed by the 3D image frame generating module 163 and the OS.

Meanwhile, according to various exemplary embodiments, the image display apparatus 100 may further include a multiplexer (mux) (not illustrated) for multiplexing the image frame. The mux may multiplex and output the 3D image frame so that the left-eye image frame and the right-eye image frame of the 3D image frame can be alternately placed.

The output device 130 may output the signal-processed image data. The output device will be further explained below.

The interface unit 150 may communicate with the external devices using various methods. The external devices may be many different types of electronic devices, including, for example, a remote controller, a shutter glass, a PC, and a set-top box. The interface unit 150 may be implemented based on various communication technologies. For instance, the interface unit 150 may include an RF communication module and communicate with the external devices accordingly. The RF communication module may be a Bluetooth communication module. For communication with the shutter glass, the interface unit 150 may generate a transport stream incorporating therein the synchronizing signals according to the Bluetooth communication standard and transmit the transport stream.

Even though the above description describes that the interface unit 150 may communicate according to the Bluetooth communication method, this description exemplary only. Beside the Bluetooth method, various other types of communication methods, such as infrared communication or Zigbee communication, may be utilized. Other wireless communication methods for generating the communication channel in the adjoined area and transmitting and receiving the signals may be also utilized.

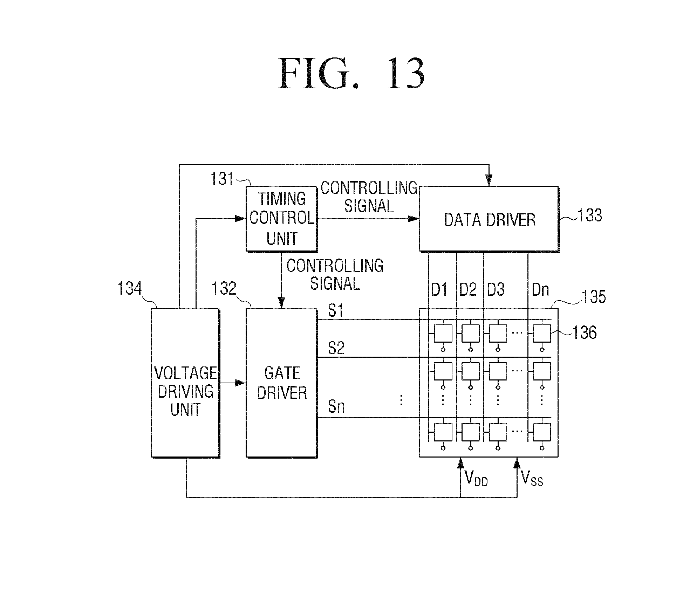

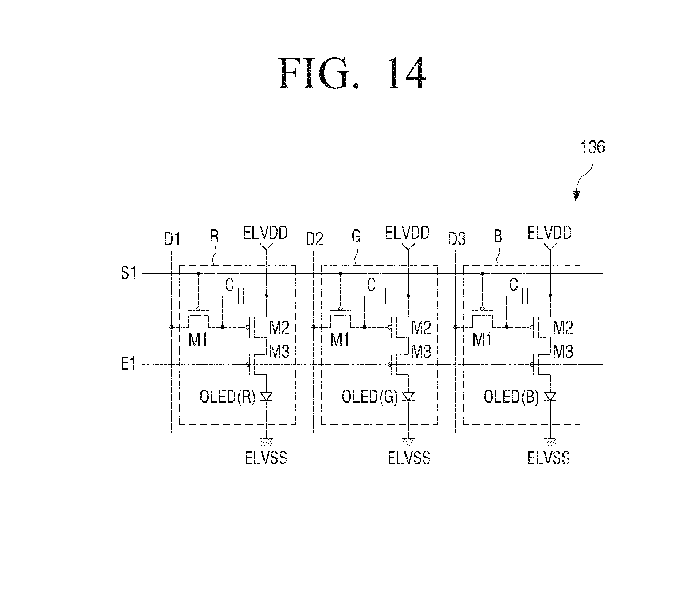

The output device 130 may output the image data. The output device 130 will be described by referring to FIGS. 13 and 14.

The controller 160 may control the overall operation of the image display apparatus 100. Specifically, the controller 160 may control a plurality of receiving units 110-1, 110-2, ... , 110-n, a plurality of signal processing units 120-1, 120-2, ... , 120-n, the mux (not illustrated), the output device 130, and the interface unit 150, to perform the corresponding functions, respectively. As already described, the controller 160 may include the CPU and the OS, and may employ a framework or an application to control the above units.

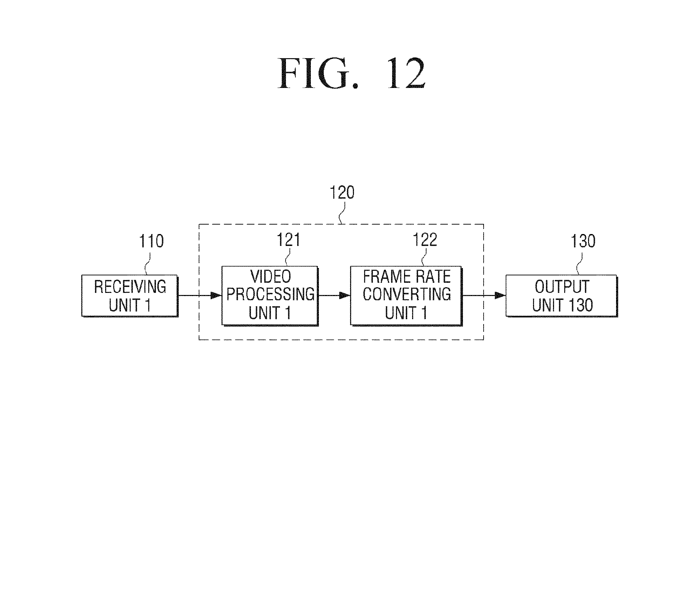

FIG. 12 is a detailed block diagram of a signal processing unit according to an exemplary embodiment.

Referring to FIG. 12, the signal processing unit 120 may include a video processing unit 121 and a frame rate converting unit 122. The video processing unit 121 may process the signals of the video data included in the received contents. Specifically, the video processing unit 121 may include a decoder (not illustrated) for decoding the video data, and the scaler of FIGS. 8 to 10 for down-scaling or up-scaling to fit the screen size of the output device 130. The scaler is described above.

The video processing unit 121 may convert the video data in the data format corresponding to the frame rate converting unit 122. For instance, the image frame of each portion of the contents may be connected to the horizontal direction and converted in the side-by-side format. Specifically, the video processing unit 121 may generate the 3D image frame from the 2D image frame. The process is the same as described above.

The frame rate converting unit 122 may convert the frame rate of the contents provided from the video processing unit 121 to the multi contents display rate by referring to the outputting rate of the image display apparatus 100. Specifically, when the image display apparatus 100 operates at 60 Hz, the frame rate converting unit 122 may convert the frame rate of each contents to n x 60 Hz.

By referring to FIGS. 13 to 14, the output device 130 will be explained below.

FIG. 13 is a detailed block diagram of a circuit structure of an output device, and FIG. 14 is a block diagram of a circuit structure of a display panel according to an exemplary embodiment.

The output device 130 may output the scaled 3D image frame. Specifically, the output device 130 may include a timing controller 131, a gate driver 132, a data driver 133, a voltage driving unit 134, and a display panel 135.

The timing controller 131 may receive the clock signal (DCLK), a horizontal driving signal (Hsync), and an orthogonal driving signal (Vsync) suitable for the resolution of the image display apparatus 100, generate a gate controlling signal (scanning controlling signal) and a data controlling signal (data signal), rearrange the inputted R, G, B data, and provide the rearranged R,G,B data to the data driver 133. The timing controller 131 may generate the Gate Shift Clock (GSC), the Gate Output Enable (GOE), and the Gate Start Pulse (GSP) with regard to the gate controlling signal. The GSC is the signal to determine the time of turning on or off the TFT connected to the light emitting components such as R, G, B OLED, the GOE is the signal to control the outputting of the gate driver, and the GSP is the signal for informing the first driving line of the screen in one orthogonal driving signal.

Further, the timing controller 131 may generate the Source Sampling Clock (SSC), the Source Output Enable (SOE), and the Source Start Pulse (SSP) with regard to the data controlling signal. The SSC may be utilized to latch the data in the data driver, and determine the driving frequency of the data drive IC. The SOE may transmit the latched data to the display panel by the SSC. The SSP is the signal informing the start of latching or sampling the data during one horizontal driving period.

The gate driver 132 may generate the scanning signals and be connected to the display panel via the scanning lines S1, S2, S3, ... , Sn. The gate driver 132 may allocate the gate on and off voltage (Vgh and Vgl) provided from the voltage driving unit 134 to the display panel 135 by the gate controlling signals generated by the timing controller. The gate on voltage (Vgh) may be provided consecutively from Gate Line 1 (GL1) to Gate Line n (GLn) to implement the basic frame image on the display panel 135.

The data driver 133 may generate the data signal, and be connected to the display panel 135 via the data lines, D1, D2, D3, ... , Dn. The data driver 133 may complete the scaling according to the data controlling signal generated by the timing controller 111 and input the RGB data of the left-eye image frame and the right-eye image frame of the 3D image data to the display panel 135. The data driver 133 may convert the RGB data provided in serial from the timing controller 131 to be arranged in parallel, convert the digital data to be in the analogue voltage, and provide the image data of one horizontal line to the display panel 135. The processing may be implemented consecutively in each horizontal line.

The voltage driving unit 134 may generate and transmit the driving voltage to the gate driver 132 and the data driver 133. By providing the commonly used voltage provided from an exterior source, such as an alternating current voltage of 110V or 220V, the voltage driving unit 134 may generate and provide the power voltage (VDD) necessary for the display panel 135 or provide the ground voltage (VSS). Further, the voltage driving unit 134 may generate the gate on voltage (Vgh) and provide the generated Vgh to the gate driver 132. For the generating and the providing, the voltage driving unit 134 may include a plurality of voltage driving modules (not illustrated) operating individually from each other. The plurality of voltage driving modules (not illustrated) may operate to provide different voltages according to control by the controller 160, and the controller 160 may control the voltage driving unit 134 to cause the plurality of voltage driving modules to provide different driving voltages based on predetermined information. For instance, each of a plurality of voltage driving modules may provide first voltages which are different from each other, or may provide default-set second voltages, based on the predetermined information controlled by the controller 160.

According to an exemplary embodiment, the voltage driving unit 134 may include a plurality of voltage driving modules corresponding to a plurality of divided areas of the display panel 135. The controller 160 may control the plurality of voltage driving modules to provide the different first voltages to each other as the electroluminescent lamp power voltage (ELVDD), depending on the screen information (or the inputting image information) of a plurality of divided areas. Thus, the controller 160 may control the size of the ELVDD voltage by utilizing the inputted image signals. The screen information may indicate at least one of the brightness and the grayscale information regarding the inputted images.

In the display panel 135, a plurality of gate lines GL1 ∼ GLn (shown in FIG. 13 as the lines used to transmit the controlling signals S1, S2...Sn) crossing each other and identifying the pixel areas and a plurality of data lines DL1 ∼ DLn may be generated. In the crossed pixel area 136, the R, G, B emitting components such as OLEDs may be disposed. In one area of the pixel areas 136, more specifically, in the corner, the switching component, such as a TFT, may be disposed. When the TFT is turning on, the gray voltage from the data driver 133 may be provided to each of the emitting components, R, G, B. The emitting components of R, G, B may provide the light in response to the electronic alternating current amount provided based on the gray voltage. By providing greater amounts of the electronic alternating currents, the emitting components of R, G, B may provide more light.

Referring to FIG. 14, the emitting components of R, G, B will be further explained below. The display panel 135 includes switching devices (M1) operated by the scanning signal S1 (in other words, the gate on voltage (Vgh)), switching devices (M2) for outputting the electronic currents based on the pixels including the changed high grayscale value provided to the data lines (DL1 ∼ DLn), and switching devices (M3) for controlling the amount of the electronic currents provided to the R, G, B emitting components from the switching devices M2 based on the controlling signals provided from the timing controller 131. The switching devices (M₃) may be connected to the OLED and provide the electronic currents to the OLED. The OLED is a display device which emits light according to an electronic field emitting principle when the electronic currents flow to the fluorescent or the phosphorescent organic film. The anode electrode of the OLED may connect to the pixel circuit and the cathode electrode may connect to the second electronic source (ELVSS). The OLED may generate brightness of the light in response to the electronic currents provided from the pixel circuit. The gate electrode M1 may connect to the scanning line (S1) and the first electrode may connect to the data line (D1).

As explained above, according to an exemplary embodiment, the display panel 135 may be implemented as an Active Matrix Organic Light-Emitting Diode (AM-OLED). However, the above is merely one of the exemplary embodiments, and the display panel 135 may also be implemented as various other types of displays according to other exemplary embodiments, such as, for example, a Passive Matrix Organic Light-Emitting Diode (PM OLED) driven so that each line separately emits light.

Although FIG. 14 illustrates an OLED, the output device 130 may be implemented in various other display technologies according to exemplary embodiments, such as the Liquid Crystal Display Panel, the Plasma Display Panel, the OLED, the Vacuum Fluorescent Display (VFD), the Field Emission Display (FED), and the Electro Luminescence Display (ELD).

In summary, according to various exemplary embodiments, when the scaling of image data is performed in a situation where the encoded aspect ratio of the image data is different from the decoded aspect ratio of the image data, the mainly-viewed area may be outputted as a naturally-looking image without having distortion thereon, while the other areas may be displayed according to output aspect ratios. Thus, the image distortion may be minimized and the viewer may view a natural looking image.

Further, when the 2D image data is converted to 3D image data and when the screen size is different before and after converting or the converting is limited for some reason, the image may be processed appropriately to provide a natural-looking 3D image.

The foregoing exemplary embodiments and advantages are merely exemplary and are not to be construed as limiting. The present teachings can be readily applied to other types of apparatuses. Also, the description of the exemplary embodiments intended to be illustrative, and not to limit the scope of the claims, and many alternatives, modifications, and variations will be apparent to those skilled in the art.

## Claims

1. A method of scaling image data of a 3-dimensional 3D image frame comprising a plurality of areas, the method comprising:
generating a depth map including depth information for each area of the 3D image frame constituting image data;
setting a scale ratio in each area of the 3D image frame based on the generated depth map;
scaling the image data of the 3D image frame based on the set scale ratio; and
outputting the scaled 3D image frame.

2. The method of claim 1, further comprising converting 2-dimensional 2D image data into the 3D image data.

3. The method of claim 2, wherein the converting comprises generating a 3D image frame comprising at least one of a left-eye image frame and a right-eye image frame from a 2-dimensional 2D image frame.

4. The method of claim 3, wherein the converting comprises:
generating the right-eye image frame by shifting the 2D image frame in a first direction;
generating the left-eye image frame by shifting the 2D image frame in a second direction opposite the first direction; and
displaying the right-eye image frame and the left-eye image frame at alternating times to thereby display the 3D image data.

5. The image data scaling method of any one of the preceding claims, wherein the depth information includes depths of respective pixels of the 3D image frame.

6. The image data scaling method of any one of the preceding claims, wherein the setting the scale ratio comprises setting a scale ratio of another area of the 3D image frame with reference to an area of the 3D image frame having the depth equal to, or less than a predetermined value.

7. The image data scaling method of claim 5, wherein the setting the scale ratio comprises setting a scale ratio of another pixel of a series of pixels arranged on respective pixel lines of the 3D image frame based on a pixel having the depth equal to, or less than a predetermined value.

8. The method of any one of the preceding claims, wherein the scaling comprises:
scaling the 3D image data in a first area of the frame according to a first ratio; and
scaling the 3D image data in a second area of the frame according to a second ratio greater than the first ratio.

9. The method of claim 8, wherein the scaling of the 3D image data in the first and second areas comprises:
generating the depth map including depth information for the first and second areas; and
setting the first and second ratios according to the depth information for the first and second areas, respectively.

10. An image display apparatus for displaying a 3D image frame comprising a plurality of areas, the image display apparatus comprising:
a control unit which generates a depth map including depth information in each area of the 3D image frame constituting image data and sets a scale ratio in each area of the 3D image frame according to the generated depth map;
a scale unit which scales the image data of the 3D image frame according to the set scale ratio; and
an output unit which outputs the scaled 3D image frame.

11. The image display apparatus of claim 10, wherein the control unit generates a 3D image frame comprising at least one of a left-eye image frame and a right-eye image frame from the 2-dimensional 2D image frame.

12. The image display apparatus of claim 10 or 11, wherein the depth information includes depths of respective pixels of the 3D image frame.

13. The image display apparatus of any one of claims 10 to 12, wherein the control unit sets a scale ratio of another area of the 3D image frame with reference to an area of the 3D image frame having the depth equal to, or less than, a predetermined value.

14. The image display apparatus of any one of claims 10 to 13, wherein the control unit sets a scale ratio of another pixel of a series of pixels arranged on respective pixel lines of the 3D image frame based on a pixel having the depth equal to, or less than, a predetermined value.
